Europäisches Patentamt

European Patent Office

Office européen des brevets

(19)

(11) Numéro de publication: **0 314 710 B1**

(12) **FASCICULE DE BREVET EUROPEEN**

(45) Date de publication de fascicule du brevet: **16.12.92**  (51) Int. Cl.⁵: **H02B 1/24**, H01H 43/00

(21) Numéro de dépôt: **88902502.9**

(22) Date de dépôt: **15.03.88**

(86) Numéro de dépôt internationale :
**PCT/FR88/00135**

(87) Numéro de publication internationale :
**WO 88/07278 (22.09.88 88/21)**

(54) **COMMANDE D'INSTALLATION ELECTRIOUE BASSE TENSION ASSURANT TROIS FONCTIONS: MARCHE, ARRET, AUTOMATIOUE.**

(30) Priorité: **17.03.87 FR 8703659**

(43) Date de publication de la demande:
**10.05.89 Bulletin 89/19**

(45) Mention de la délivrance du brevet:
**16.12.92 Bulletin 92/51**

(84) Etats contractants désignés:
**AT BE CH DE FR GB IT LI LU NL SE**

(56) Documents cités:
**DE-A- 1 440 894**
**DE-C- 640 885**
**DE-C- 1 134 447**
**FR-A- 721 862**
**US-A- 4 097 763**

(73) Titulaire: **HAGER ELECTRO S.A.**
**Boulevard d'Europe**
**F-67210 Obernai(FR)**

(72) Inventeur: **MICHAUD, Norbert**
**100, rue Saint Louis**
**F-27000 Evreux(FR)**

(74) Mandataire: **Lemoine, Michel et al**
**CABINET LEMOINE ET BERNASCONI 13, Boulevard des Batignolles**
**F-75008 Paris(FR)**

EP 0 314 710 B1

# Description

L'invention concerne un dispositif permettant, sur marche ou arrêt, de commander manuellement la mise en marche ou l'arrêt d'une installation et, sur automatique, d'obtenir le même résultat automatiquement par un ou plusieurs systèmes extérieurs auxquels le dispositif est asservi. Positionné sur marche ou arrêt, le dispositif assure les fonctions marche ou arrêt permanents.

Traditionnellement, une installation spécifique est raccordée au secteur par une prise ou un interrupteur. Pour des raisons de sécurité, de confort ou d'économies d'énergie, l'installation peut être pilotée par un dispositif permettant, par fermeture ou ouverture automatique d'un contact asservi, sa mise en marche ou son arrêt temporaire : minuterie, inter horaire ou crépusculaire, thermostat, etc.

En dépit des avantages qu'ils apportent, ces dispositifs automatiques présentent l'inconvénient, soit de maintenir ou réarmer une fonction dont l'utilisateur n'a plus la nécessité, soit de la couper alors que le besoin persiste; il leur manque les fonctions marche ou arrêt permanents. Leur contact unipolaire en limite la puissance et il est nécessaire de leur adjoindre un actionneur de puissance et des commandes pour obtenir les fonctions marche et arrêt permanents.

Une solution simple, ne comportant qu'un seul circuit de puissance et un câblage intérieur très réduit, consisterait à utiliser un contacteur type "Jour-Nuit" ou "Heures Creuses", c'est à dire assurant, par l'intermédiaire d'un sélecteur manuel, la fonction arrêt par coupure de l'alimentation de la bobine de commande, la fonction automatique par l'alimentation de la bobine de commande au travers d'un contact extérieur asservi, la fonction marche mécaniquement, avec retour à la fonction automatique lors de la fermeture du contact extérieur asservi.

Ce type de contacteur permet d'assurer les fonctions automatique et arrêt mais il ne peut, de par sa conception, assurer la marche permanente et la puissance délivrée est faible.

La présente invention a pour but de remédier à ces inconvénients.

L'invention, telle qu'elle est caractérisée dans les revendications résout les problèmes consistant à obtenir un oontacteur, commandé, de manière analogue à ceux de type "Jour-Nuit" ou "Heures Creuses", par un sélecteur, dont la fonction marche est rendue permanente par la coupure, par le sélecteur, de l'alimentation de le bobine de commande: le retour automatique à la fonction automatique est alors impossible, et à permettre à ce type de contacteur de délivrer une puissance plus élevée.

Suivant le mode de positionnement linéaire ou rotatif du sélecteur la présente invention assure les fonctions marche et arrêt soit par ouverture d'un contact unique d'alimentation de la bobine, soit par ouverture d'un contact sur la position marche et d'un autre sur le position arrêt, soit par ouverture omnipolaire de l'alimentation de la bobine sur les positions marche et arrêt. La présente invention permet, de surcroît, par fermeture des contacts d'alimentation de la bobine de commande et courtcircuit du contact extérieur asservi, assurés par un sélecteur rotatif, entre les positions arrêt et marche et inversement, que le verrouillage et le déverrouillage mécaniques soient assistés par la bobine de commande et de délivrer ainsi, si nécessaire, une puissance plus élevée.

Les avantages obtenus grâce à cette invention consistent essentiellement en ce que le dispositif combine de manière simple et économique les avantages d'un interrupteur et d'un automatisme et permet par une seule commande, le sélecteur, d'assurer le mode de fonctionnement choisi. Les fonctions marche et arrêt sont permanentes et l'automatisme est alimenté en attente; la fonction automatique permet à l'utilisateur de bénéficier, sans restriction, de la totalité des possibilités offertes par l'automatisme auquel le dispositif est asservi, élargissant ainsi les possibilités d'utilisation de l'installation et simplifiant la tâche de l'installateur et de l'utilisateur.

L'invention est exposée ci-après en détail à l'aide des dessins annexés, sur lesquels :
- la Figure 1 représente, sous forme de schéma, un dispositif réalisé conformément à la présente invention, le sélecteur, linéaire, étant positionné sur marche;
- la Figure 2 représente, sous forme de schéma, un dispositif réalisé conformément à la présente invention, le sélecteur, rotatif, étant positionné sur arrêt;
- la Figure 3 représente, sous forme de schéma, un dispositif réalisé conformément à la présente invention, qui, associé à un inter horaire et à un inter crépusculaire, assure, par exemple, le fonctionnement de l'éclairage d'un magasin, le sélecteur, rotatif, étant positionné sur automatique;
- la Figure 4 représente, sous forme de schéma, un dispositif réalisé conformément à la présente invention, le sélecteur, rotatif, étant positionné entre marche et arrêt.

Les figures représentent un dispositif comprenant essentiellement un contacteur 1, comportant extérieurement un sélecteur manuel 2, à trois positions : marche 3, arrêt 4, automatique 5, et intérieurement sa bobine de commande 6, les contacts d'alimentation de la bobine 7,8, les points de contact e, f, g, les bornes d'alimentation des contacts 17, 18, les contacts du contacteur a, b, c, d, les bornes d'alimentation 9, 10, 11,12 et de distribution de ces contacts 13, 14, 15, 16, un inter horaire A, son contact asservi 20, un inter crépusculaire B et son contact asservi 22. Ces figures permettent d'expliquer le fonctionnement du dispositif.

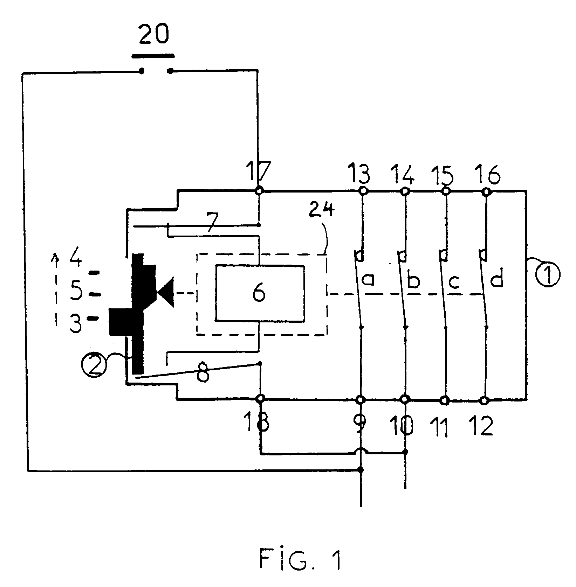

Fonction marche, Figure 1 : le sélecteur 2, linéaire dans ce cas de figure, positionné sur marche 3, assure mécaniquement la fermeture des contacts a, b, c, d, du contacteur 1 et l'alimentation omni polaire de l'installation 9 - 13, 10 - 14, 11 - 15, 12 - 16. De plus, il assure mécaniquement l'ouverture du contact 8 d'alimentation de la bobine de commande 6 : l'installation est sur marche permanente.

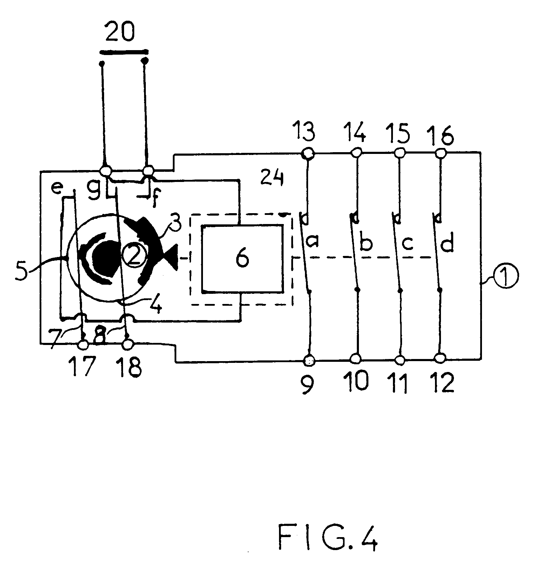

Pour permettre au dispositif de délivrer une puissance plus élevée, le sélecteur 2, rotatif dans ce cas, Figure 4, dans son déplacement de la position arrêt à la position marche, par un jeu approprié de cames, courtcircuite le contact extérieur asservi 20, ferme les contacts 7, 8 et alimente par 17 - 7 - e et 18 - 8 - g la bobine de commande 6 du contacteur 1 assurant ainsi une fermeture brusque des contacts a, b, c, d et l'alimentation omnipolaire de l'installation, puis assure un début de verrouillage mécanique du contacteur 1, puis l'ouverture des contacts 7, 8 et la coupure de l'alimentation de la bobine de commande 6, enfin le verrouillage complet du oontacteur 1 sur la position marche : l'installation est sur marche permanente.

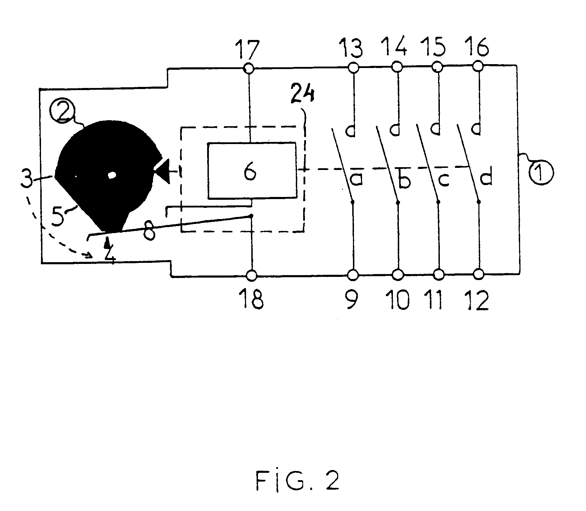

Fonction arrêt, Figure 2 : le sélecteur 2, rotatif dans ce cas de figure, positionné sur arrêt 4, assure mécaniquement l'ouverture du contact 8 d'alimentation de la bobine de commande 6 assurant ainsi l'ouverture des contacts a, b, c, d du contacteur 1 et la coupure omni polaire de l'installation : l'installation est sur arrêt permanent.

Pour permettre au dispositif de délivrer une puissance plus élevée, le sélecteur 2, rotatif dans ce cas, Figure 4, dans son déplacement de la position marche à la position arrêt, commande le début du déverrouillage mécanique du contacteur 1, puis, par un jeu approprié de oames, ferme les contacts 7, 8, courtcircuite le contact extérieur asservi 20 et alimente par 17 - 7 - e, 18 - 8 - g la bobine de commande 6 du contacteur 1 maintenant fermés les contacts a, b, c, d du contacteur 1, puis assure le déverrouillage complet du contacteur 1, puis l'ouverture des contacts 7, 8 et la coupure de l'alimentation de la bobine 6 provoquant ainsi une ouverture brusque des contacts a, b, c, d et la coupure omnipolaire de l'installation : l'installation est sur arrêt permanent.

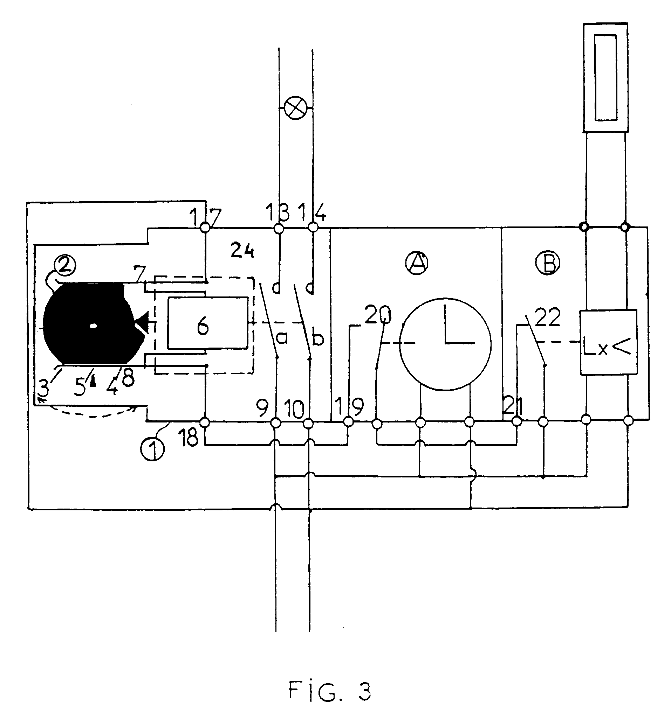

Fonction automatique, Figure 3 : le dispositif est asservi à un inter horaire A, programmé pour assurer, par exemple, l'éclairage d'un magasin de 8 heures à 20 heures, et à un Inter crépusculaire B réglé pour assurer un éclairement correct. Le sélecteur rotatif 2, positionné sur automatique 5, assure mécaniquement la fermeture des contacts 7, 8 d'alimentation de la bobine de commande 6, permettant ainsi son pilotage par le contact 20 de l'inter horaire A asservi au contact 22 de l'inter crépusculaire B. Sur la Figure 3, l'installation n'est pas alimentée car, si l'alimentation 10, 17, 7 de la bobine 6 est correcte, l'alimentation 9, 22, 21, 20, 19, 18, 8 de la bobine 6 est interrompue par le contact 20 de l'inter horaire A car il est, par hypothèse, 03 heures. Pour allumer la lumière deux solutions sont possibles : soit agir sur l'automatisme et faire tourner l'indicateur de l'inter horaire A de 03 heures à 08 heures, le contact 20 se ferme, alimente la bobine 6 qui ferme le contacteur 1 et assure la mise en marche de l'installation; la lumière restera allumée de 03 H à 20 H ou jusqu'à l'ouverture du contact 22 de l'inter crépusculaire B; soit, plus simplement, positionner le sélecteur 2 du dispositif selon l'invention sur marche 3 et le replacer sur automatique 5 en fin d'inspection.

Conçu pour être vissé sur un tableau, enclipsé et verrouillé dans des tableaux ou coffrets modulaires ou incorporé à une machine, raccordé facilement par des connecteurs à vis et réalisé selon les normes et avec les matériaux prescrits par les normes de sécurité en vigueur, le dispositif selon l'invention, par sa simplicité et sa fiabilité, est susceptible de multiples applications dans l'habitat, le tertiaire, chez les artisans, dans l'agriculture, partout où il y a une distribution électrique spécifique : éclairage, chauffage, ventilation, machine, arrosage, etc. et il permet l'asservissement de ces circuits à des automatismes divers augmentant ainsi la sécurité, le confort ou les économies d'énergie.

Sécurité : le dispositif permet la mise en marche, la surveillance et l'arrêt manuels d'une machine; sur automatique, la télécommande peut être assurée par une multitude de contacts permettant soit un arrêt d'urgence manuel: inter sur pupitre central, soit automatique: détecteur thermique, de surpression, inter de position, etc.

Confort : le dispositif associé à un inter horaire et à un hygrostat commande, soit une pompe électrique puisant dans une citerne ou un étang, soit une électrovanne sur le circuit de distribution d'eau et assure l'arrosage d'un jardin. Sur marche et arrêt la mise en route et l'arrêt de l'arrosage sont commandés manuellement. Sur automatique, l'arrosage se fera automatiquement pendant la période programmée sur l'inter horaire et sera, de plus, subordonné à l'hygrostat qui interrompra ou interdira la séquence en cas de pluie ou si l'humidité requise est atteinte. Pour respecter les normes de sécurité, la bobine de commande, l'électrovanne et l'hygrostat seront alimentés en Très Basse Tension de Sécurité. Le dispositif peut, dès leur conception être incorporé à la pompe ou à l'électrovanne.

Economies d'énergie: le dispositif associé à un thermostat extérieur, règlé entre 1 et 3°C, commande sur marche et arrêt le brûleur et le circulateur d'une installation de chauffage central. Sur automatique, lorsque la température sera inférieure à celle affichée sur le thermostat extérieur, le dispositif assurera la mise sous tension du brûleur et du circulateur; si la chaudière fournit l'eau chaude sanitaire le brûleur se mettra en route, si non, le thermostat d'ambiance, règlé à 8°C, commandera, si nécessaire, l'allumage du brûleur et la circulation de l'eau dans les radiateurs: la protection anti gel est assurée en cas d'absence prolongée. Lorsque la température extérieure est supérieure à celle affichée sur le thermostat extérieur, le brûleur et le circulateur ne sont pas alimentés, l'eau n'est pas maintenue inutilement à température constante dans la chaudière et ne risque pas d'alimenter les radiateurs par thermosyphon, l'économie d' énergie est totale. Le dispositif peut, dès sa conception, être incorporé à la chaudière.

Ces exemples ne sont pas limitatifs et le dispositif selon l'invention peut être utilisé dans de multiples applications économiques, facilement réalisables, dans les domaines les plus variés.

**Revendications**

1. Dispositif pour la commande d'une installation électrique Basse Tension comprenant au moins un appareil utilisateur, lequel dispositif comporte un contacteur (1) commandé par un sélecteur manuel (2) et raccordé électriquement à l'appareil utilisateur, à la fois directement et par l'intermédiaire d'une bobine (6) pilotée par un ou plusieurs systèmes extérieurs (20,22) auxquels elle est asservie, de façon à déterminer, pour l'appareil utilisateur, trois fonctions, à savoir Marche permanente (3), Automatique (5), Arrêt permanent (4), ces fonctions étant déterminées par la position correspondante du sélecteur manuel (2) qui, en position Arrêt permanent (4), coupe l'alimentation de la bobine (6) et assure mécaniquement l'ouverture omnipolaire du contacteur (1), en position Automatique(5), ferme l'alimentation de la bobine (6) et permet le pilotage de cette dernière par lesdits systèmes extérieurs d'asservissement dans le sens de l'ouverture ou de la fermeture omnipolaires du contacteur (1) et, en position Marche permanente (3), assure mécaniquement la fermeture omnipolaire du contacteur (1) et la coupure de l'alimentation de la bobine (6).

2. Dispositif selon la revendication 1, caractérisé en ce que, en position Marche permanente (3), le sélecteur manuel (2) coupe l'alimentation de la bobine (6) par ouverture d'un premier contact (8) et, en position Arrêt permanent (4), par ouverture d'un deuxième contact (7).

3. Dispositif selon la revendication 1, caractérisé en ce que le sélecteur manuel (2) est un sélecteur rotatif qui assure les coupures de l'alimentation de la bobine (6) par ouverture d'un contact unique (8).

4. Dispositif selon l'une quelconque des revendications 1 à 3, dans lequel le sélecteur manuel (2) est un sélecteur rotatif, caractérisé en ce que, lorsque le sélecteur manuel (2) est amené de la position Arrêt permanent (4) à la position Marche permanente (3), ou inversement, ledit selecteur courtcircuite les systèmes extérieurs d'asservissement, provoquant ainsi une alimentation temporaire de la bobine (6) de façon à assurer respectivement une fermeture et une ouverture omnipolaires brusques du contacteur.

**Claims**

1. A device for operating a low voltage electrical installation comprising at least one user appliance, the said device comprising a contactor (1) operated by a manual selector (2) and connected electrically to the user appliance both directly and via a coil (6) controlled by one or a plurality of external systems (20, 22) by which it is controlled, in such a way as to determine for the user appliance three functions, viz.: PERMANENTLY ON (3), AUTOMATIC (5), PERMANENTLY OFF (4), these functions being determined by the corresponding position of the manual selector (2) which, in the PERMANENTLY OFF position (4) shuts off the supply to the coil (6) and mechanically causes on the polar opening of the contactor (1), and in the AUTOMATIC position (5) shuts off the supply to the coil (6) and allows this latter to be controlled by the said external control systems for omnipolar opening or closing of the contactor (1) and in the PERMANENTLY ON position (3), mechanically ensures omnipolar closure of the contactor (1) and shut off of supply to the coil (6).

2. A device according to claim 1, characterised in that in the PERMANENTLY ON position (3) the selector manual (2) shuts off the supply to the coil (6) by opening a first contact (8) and, in the PERMANENTLY OFF position (4), by opening a second contact (7).

3. A device according to claim 1, characterised in that the manual selector (2) is a rotary selector which cuts off the supply to the coil (6) by opening a single contact (8).

4. A device according to any one of claims 1 to 3, in which the manual selector (2) is a rotary selector, characterised in that when the manual selector (2) is moved from the PERMANENTLY OFF position (4) to the PERMANENTLY ON position (3) or vice versa, the said selector short-circuits the external control systems, so causing a temporary supply to the coil (6) in order respectively to provide for omnipolar sudden closure or opening of the contactor.

**Patentansprüche**

1. Steuerung für eine elektrische Niederspannungsanordnung mit mindestens einem Verbraucher, wobei die Steuerung einen durch einen manuellen Wähler (2) gesteuerten Kontaktgeber (1) aufweist, der elektrisch unmittelbar wie auch über eine durch ein oder mehrere externe Systeme (20, 22) gesteuerte Wicklung (6) mit dem Verbraucher verbunden ist, wobei die Wicklung (6) durch die externen Systeme (20, 22) derart gesteuert wird, daß sie für den Verbraucher drei Funktionen, nämlich Dauerbetrieb (3), Automatikbetrieb (5) und Dauerhalt (4) bestimmt und diese Funktionen durch die entsprechende Position des manuellen Wählers (2) bestimmt werden, der bei der Position Dauerhalt (4) die Stromzufuhr zu der Wicklung (6) unterbricht und mechanisch eine allpolige Öffnung des Kontaktgebers (1) bewirkt, bei der Position Automatikbetrieb (5) die Stromzufuhr zu der Wicklung (6) schließt und die Steuerung derselben durch die externen Systeme gestattet im Sinne einer allpoligen Öffnung oder Schließung des Kontaktgebers (1) und in der Position Dauerbetrieb (3) mechanisch die allpolige Schließung des Kontaktgebers (1) und die Unterbindung der Stromzufuhr zu der Wicklung (6) bewirkt.

2. Steuerung nach Anspruch 1, dadurch *gekennzeichnet,* daß der manuelle Wähler (2) in der Position Dauerbetrieb (3) die Stromzufuhr zu der Wicklung (6) durch Öffnen eines ersten Kontakts (8) und in der Position Dauerhalt (4) durch Öffnen eines zweiten Kontakts (7) unterbricht.

3. Steuerung nach Anspruch 1, dadurch *gekennzeichnet,* daß der manuelle Wähler (2) ein drehbarer Wähler ist, der die Unterbrechung der Stromzufuhr zu der Wicklung (6) durch Öffnen eines einzigen Kontakts (8) bewirkt.

4. Steuerung nach einem der Ansprüche 1 bis 3, wobei der manuelle Wähler (2) ein drehbarer Wähler ist, dadurch *gekennzeichnet,* daß beim Umstellen des manuellen Wählers (2) von der Position Dauerhalt (4) zur Position Dauerbetrieb (3) oder umgekehrt der betreffende Wähler die externen Systeme kurzschließt, wodurch er eine zeitweise Stromversorgung der Wicklung (6) in einer Weise hervorruft, die eine plötzliche allpolige Schließung bzw. Öffnung des Kontaktgebers bewirkt.

FIG. 1

FiG. 2

FiG. 3

FIG.4